Europäisches Patentamt

European Patent Office

Office européen des brevets

(19)

(11) **EP 1 154 665 B1**

(12) **EUROPEAN PATENT SPECIFICATION**

(45) Date of publication and mention
of the grant of the patent:
**13.10.2004 Bulletin 2004/42**

(51) Int Cl.⁷: **H04Q 7/38**, H04L 12/56

(21) Application number: **00310292.8**

(22) Date of filing: **20.11.2000**

(54) **Wireless data transmission scheduling**

Drahtlose Datenübertragungsplanung

Planification de transmission sans fil de données

(84) Designated Contracting States:
**DE FR GB**

(30) Priority: **12.05.2000 US 569684**

(43) Date of publication of application:
**14.11.2001 Bulletin 2001/46**

(73) Proprietor: **LUCENT TECHNOLOGIES INC.**
**Murray Hill, New Jersey 07974-0636 (US)**

(72) Inventors:
 • **Niranjan, Sudhir Joshi**
  **Randolfh, New Jersey 07869 (US)**
 • **Kadaba, Srinivas R.**
  **Chatham, New Jersey, 07928 (US)**
 • **Sundaram, Ganapathy Subramanian**
  **Scotch Plains, New Jersey, 07076 (US)**

(74) Representative:
**Buckley, Christopher Simon Thirsk et al**
**Lucent Technologies (UK) Ltd,**
**5 Mornington Road**
**Woodford Green, Essex IG8 0TU (GB)**

(56) References cited:
**EP-A- 0 915 632      WO-A-98/35514**
**WO-A-99/63713**

 • **PASSAS ET AL: "Improving traffic scheduling in
  wireless ATM networks" COMPUTERS AND
  COMMUNICATIONS, 1998. ISCC '98.
  PROCEEDINGS. THIRD IEEE SYMPOSIUM ON
  ATHENS, GREECE 30 JUNE-2 JULY 1998, LOS
  ALAMITOS, CA, USA,IEEE COMPUT. SOC, US,
  30 June 1998 (1998-06-30), pages 429-435,
  XP010295133 ISBN: 0-8186-8538-7**

## Description

## Background of the Invention

### 1. Field of the Invention

This invention relates to wireless communications; more particularly, to scheduling wireless data communications.

### 2. Description of the Related Art

Wireless communications that involve transmitting internet based data over cellular networks has become more popular. As a result, the efficient scheduling of data transmission to multiple cellular mobile stations has become critical. Several techniques have been used to schedule data transmissions to cellular mobile stations. In a round robin technique, data is transmitted to each mobile station that has data in a queue until each mobile station has received a transmission. After all of the mobile stations have received a data transmission, the process is repeated. In another technique, data is transmitted to the mobile station based on the size of the backlog of data in a queue. In still another prior art technique, data is transmitted to the mobile station based on the data arrival instants for the mobile station. These prior scheduling techniques do not provide an efficient use of a cellular base station's ability to communicate with multiple mobile stations.

EP-A-0 915 632 discloses a method and system which adapt scheduling priorities in a wireless communications system to conserve battery power in mobile stations operating within the system. A base station, within the system, receives battery power level information and other setup information from mobile stations operating within the service area of the base station during call setup procedures. Based on the battery power level information and other setup information, the base station assigns frequency channels to the mobile stations so that those mobile stations having battery power levels below a threshold value are assigned frequency channels that have lower interference levels than frequency channels assigned to other mobile stations. The frequency channel assignments are transmitted to the mobile stations.

WO-A-99/63713 discloses a technique for providing high speed data service over standard wireless connections via an unique integration of protocols and existing cellular signaling, such as is available with Code Division Multiple Access (CDMA) type systems through more efficient allocation of access to CDMA channels. For example, when more users exist than channels, the technique determines a set of probabilities for which users will require channel access at which times, and dynamically assigns channel resources accordingly. Channel resources are allocated according to a buffer monitoring scheme provided on forward and reverse links between a base station and multiple subscriber units. Each buffer is monitored over time for threshold levels of data to be transmitted in that buffer. For each buffer, a probability is calculated that indicates how often the specific buffer will need to transmit data and how much data will be transmitted. This probability takes into account the arrival rates of data into the buffer, as well as which thresholds within the buffer are exceeded, as well as which resources in the form of channels are already allocated to the subscriber unit.

Passas et al: "Improving traffic scheduling in wireless ATM networks" Computers and Communications, 1998. ISCC '98. Proceedings Third IEEE Symposium on Athens, Greece 30 June-2 July 1998, Los Alamitos, CA, USA, IEEE Comput. Soc, US, 30 June 1998 (1998-06-30), pages 429-435, XP010295133 ISBN: 0-8186-8538-7 discloses a scheduler algorithm which operates in the mobile terminals, and complements a centralized scheduling mechanism operating in the base stations, for improved performance. The algorithm is delay oriented to meet the requirements of the various traffic classes defined by the ATM architecture.

## Summary of the Invention

Methods according to the invention are as set out in the independent claims. Preferred forms are set out in the dependent claims.

The present invention schedules transmissions of data to mobile stations in a cellular communication system based on a data rate assigned to each mobile station where each mobile station may have different data rates. Mobile stations having higher associated data rates may receive higher scheduling priority for data transmission. Data rates associated with each mobile station may be set when the mobile station is first added to a mobile station list or the data rates may be modified based on changing channel conditions.

In another embodiment, transmissions are scheduled based on a channel condition value associated with each mobile station, where each mobile station may have a different channel condition value. The channel condition value is an indication of the quality of the communication channel to a particular mobile station and may be determined once or updated regularly.

## Brief Description of the Drawings

FIG. 1 illustrates the cellular communication system;
FIG. 2 illustrates the amount of data in a queue for each mobile station within a cell or sector;
FIG. 3 illustrates different transmission periods used for transmitting data to mobile stations;
FIG. 4 illustrates transmit power distribution among several mobile stations;

FIG. 5 illustrates a table including transmission rates, channel conditions, queue size and arrival times associated with each mobile station;

FIGS. 6A, B and C illustrate a set of cell or sector calibration data tables;

FIG. 7 is a flowchart illustrating establishing scheduling priorities where data is transmitted to only one mobile station during each transmission period;

FIG. 8 is a flowchart illustrating establishing scheduling priorities where data is transmitted to multiple mobile stations during each transmission period; and

FIGS. 9A and B are flowcharts illustrating establishing scheduling priorities where data is transmitted to multiple mobile stations during each transmission period using leftover power.

## Detailed Description

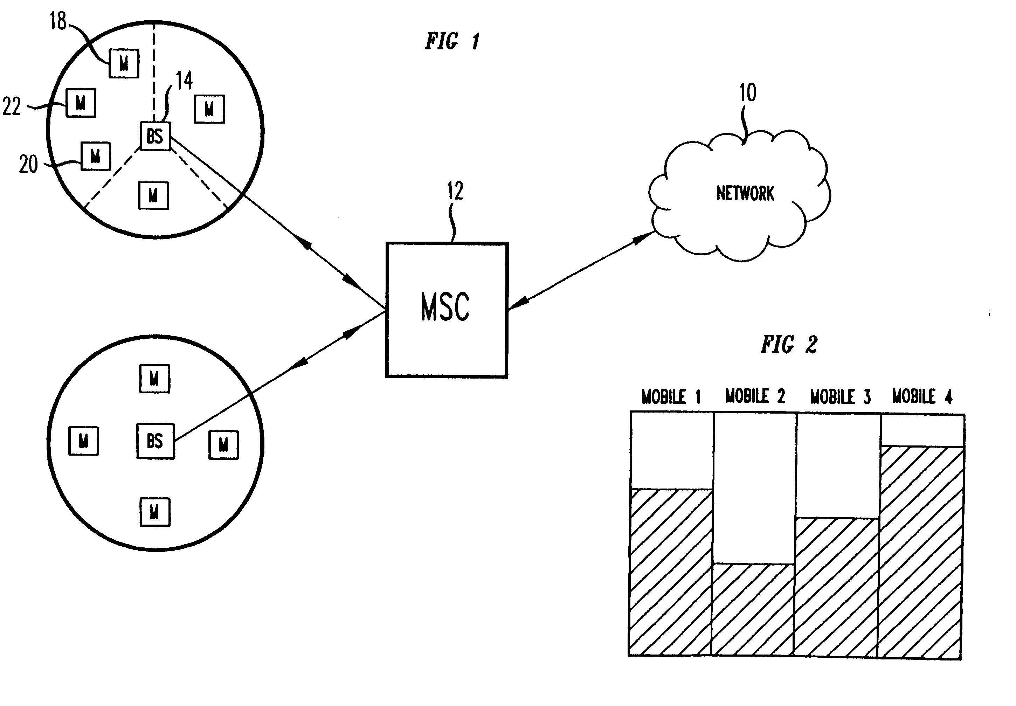

FIG. 1 illustrates a cellular communication system connected to communication network 10. Network 10 provides data to and receives data from mobile station switching center (MSC) 12. MSC 12 provides communications to a group of base stations such as base stations 14 and 16. The base station may service a cell containing one or more sectors. For example, base - station 16 treats all mobile stations within its cell as being in one sector, and base station 14 treats its cell as having three sectors where mobile stations 18, 20 and 22 are in a single sector. When data communications from network 10 are destined for a station such as mobile station 20, the data flows from network 10 to MSC 12. From MSC 12, the data is sent to base station 14 which transmits the data to mobile station 20. The data destined for the mobile station may be queued at MSC 12 or base station 14.

FIG. 2 illustrates a queue containing data stored for several different mobile stations. As mentioned earlier, the queue can be located in a base station or MSC. In FIG. 2, mobile station 4 has the most data stored in the queue while mobile station 1 has the second most, mobile station 3 the third most, and mobile station 2 has the least amount of data stored. The data transmitted to each mobile station from the queue is transmitted during transmission periods or frames.

FIG. 3 illustrates several transmission sequences containing a series of transmission periods or frames. Sequence 30 includes transmission periods 32, 34 and 36 within which data is transmitted from the queue to mobile station 1, 3 and 1 respectively. Each frame is assigned to a particular mobile station based on transmission scheduling priority that will be discussed below. Likewise, sequence 40 includes transmission periods 42, 44 and 46 which contain data from the queue destined for mobile stations. One sequence may be transmitted at a time, or in systems such as CDMA (Code Division Multiple Access) systems several sequences of data may be transmitted simultaneously using different spreading sequences to distinguish the sequences. For a particular mobile station, different transmission periods may contain data with different data rates. For example, transmission periods 32, 44 and 36 may contain data being transmitted at different rates. Different rates associated with the different frames result from changing channel conditions and are typically restricted to standardized values that will be recognized by a mobile station. It should be noted that poorer channel conditions require additional power to maintain a particular data rate; however, the transmission rates are limited by the amount of power available in a particular base station. For example, if a large amount of power is used to transmit data at a high rate in frame 34, less power is then available for transmission within frame 44 which will result in a lower data rate within frame 44.

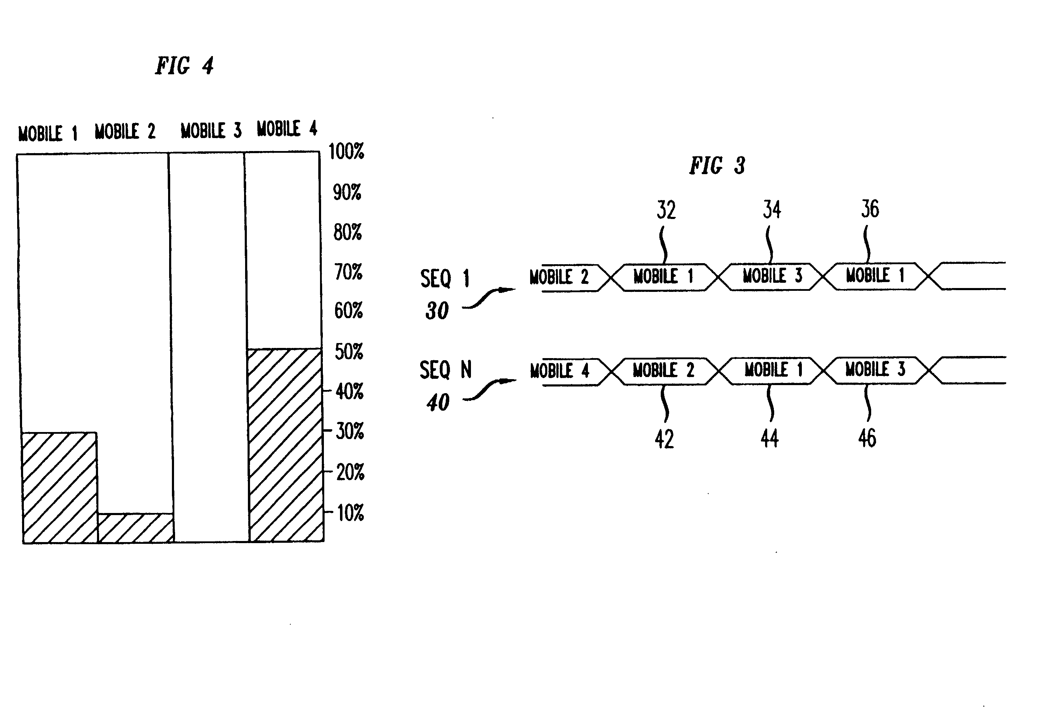

FIG. 4 illustrates a power distribution example for a transmission period where mobile station 1 receives 30 percent of the available power, mobile station 2 receives 10 percent of the available power and mobile station 4 receives 50 percent of the available power. It should be noted that mobile station 3 receives zero power and is therefore not receiving any data transmission during the transmission period illustrated by the power distribution in FIG. 4. It should be noted there is still an additional 10 percent of the base station's power is leftover based on the distribution shown in FIG. 4 (the sum of mobile stations 1, 3 and 4's power allotments is only 90 percent). However, it is possible that the remaining 10 percent power is insufficient to provide data communications to mobile station 3 at the lowest standardized data rate with an acceptable error rate.

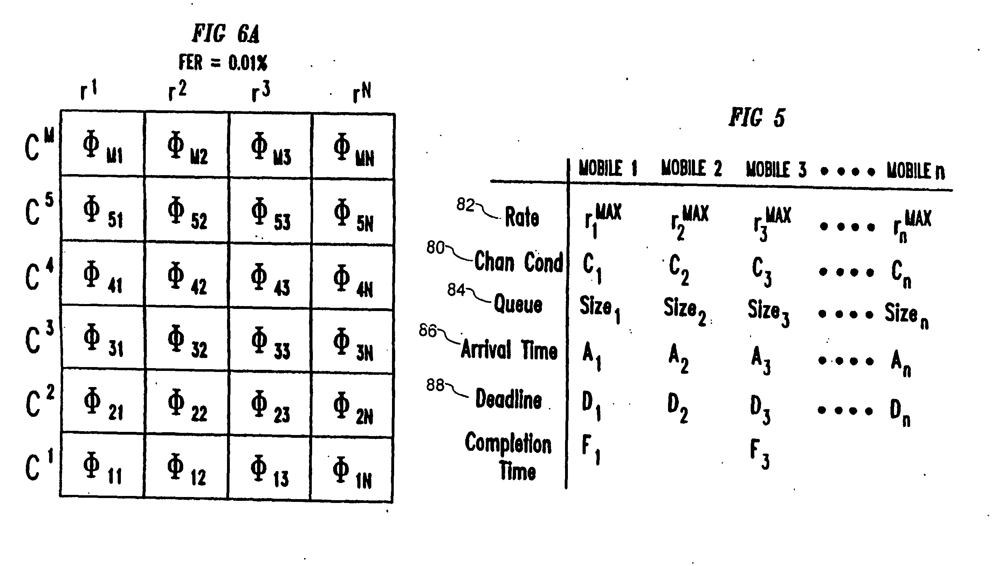

FIG. 5 illustrates a table that is used to determine data transmission scheduling priorities to mobile stations. The table lists the mobile stations having data in a transmission queue and is used to keep track of information such as the amount of data in a queue for a particular mobile station, and the maximum standard rate at which data can be transmitted to the mobile station. In this example, the mobile stations are labeled mobile station 1 through mobile station n. Row 80 associates a different channel condition $C_i$ with each mobile station. The channel conditions are determined using signaling information received from a mobile station on a reverse channel such as a Dedicated Control Channel (DCCH as defined in CDMA standard IS2000). The channel conditions may change over time and are typically related to the ratio of the pilot signal energy received per chip period $E_c$ at a mobile station to the interference power $P_i$ received per chip period at the mobile station. It is possible to use other indicators of channel condition, for example, the ratio of the signal energy per control channel bit period to the interference power per bit period may be used. These measurements are typically made by mobile stations and are then forwarded to the base station for use in functions such as controlling the amount of power used for transmission to the mobile station.

$$C_i = \frac{E_c}{P_I} \qquad \text{Equation 1}$$

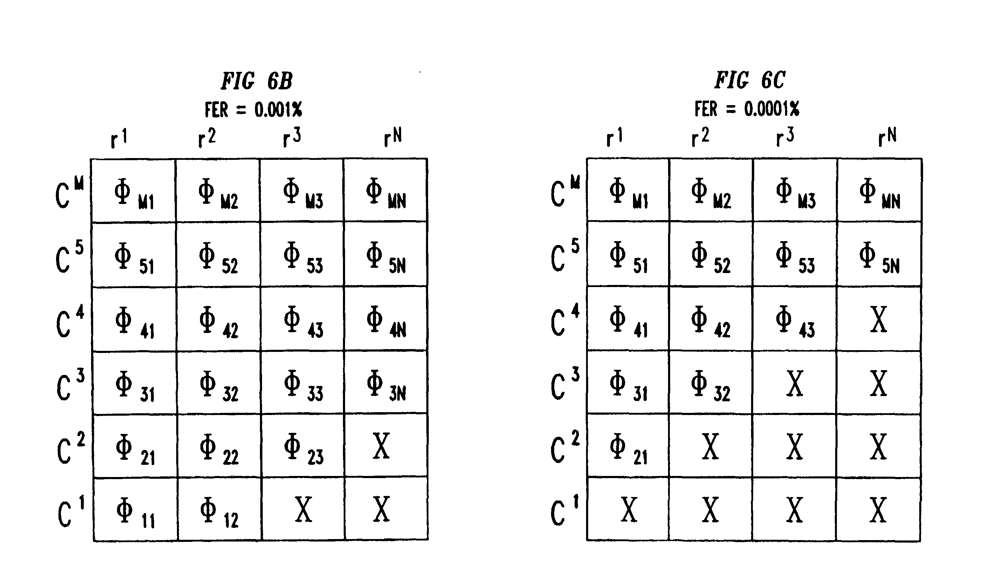

Equation 1 illustrates how channel condition variable $C_i$ is calculated using pilot signal energy per chip period measurement $E_c$ and interference power per chip period measurement $P_i$. Variable $C_i$ is then used to determine a maximum standard rate $r_i^{max}$ available for each mobile station in accordance with the cell or sector's calibration data. Tables, such as the calibration data tables in FIGS. 6A, 6B and 6C, are typically created as part of the initial calibration of a cell or sector. These tables are used to determine the maximum standard data rate $r_i^{max}$ available to a mobile station based on the channel condition $C_i$ reported by the mobile or calculated at the base - station.

There may be a single set of calibration data tables for a cell or there may be a several sets of tables for a cell where each set of tables is associated with a different cell sector. A single set of tables is illustrated in FIGS. 6A, 6B and 6C. Each of the tables in the set is associated with a different frame error rate (FER). The different FERs may be associated with different classes of service where users are charged more for communications with lower FERs. For example, the table of FIG. 6A applies to a 0.01% FER, the table of FIG. 6B applies to a 0.001% FER and the table of FIG. 6C applies to a 0.0001% FER. Different values of $C_i$ are listed along the left side of the table with the value of $C_i$ increasing from bottom to top. It should be noted that improving channel conditions are associated with moving from the bottom to the top of the table. Different values of $r_i^{max}$ are listed along the top of the table with the value of $r_i^{max}$ increasing from left to right. The entries in the table indicate the fraction of the total cell or sector transmission power that is required to communicate with a mobile station at a particular rate, given a particular channel condition while maintaining a particular FER. For example, and in reference to the table of FIG. 6B, if a particular mobile station is to receive a FER that is less than or equal to 0.001% and the channel condition reported by the mobile station is $C_i = C^4$, the power fraction $\Phi$ of total cell or sector transmission power required to provide a rate of $r_i^{max} = r^3$ is $\Phi = \Phi_{43}$.

It should be noted that the tables of FIGS. 6A through 6C may have all of the standard data rates along the top and one hundred or more values of channel conditions along the left side. If a particular value of $C_i$ from a mobile station is not shown on the table, the largest value of C that does not exceed the value from the mobile station may be used when determining the power fraction $\Phi$ that will produce a particular data rate. It should also be noted that it is possible to represent each table in other forms such as graphical form.

It should also be noted that for some values of C, higher data rates are not available even if the fraction of total cell or sector power $\Phi=1$. For example, in the table of FIG. 6B where the FER is 0.001%, the rates $r^3$ and $r^N$ are not available for $C_i = C^1$ and the rate $r^N$ is not available for $C_i = C^2$. These examples illustrate the situation when a channel condition is too poor to support higher data rates even if all of the cell or sector's power is used to communicate with the mobile station. In the case of FIG. 6C where the FER is even lower (0.0001%), more data rates are unavailable for lower values of C. In this example, none of the standard data rates are available at a FER of 0.0001% when the channel condition $C_i = C^1$.

A value $r_i^{max}$ is determined for each mobile station using the tables of FIGS. 6A, 6B and 6C based on the channel condition $C_i$ provided by the mobile station, and based on the FER associated with the mobile station's class of service. It is also possible to simply give all of the mobile stations the same FER. When determining the value $r_i^{max}$ it is assumed that all of the cell or sector's transmission power is available for one mobile, i.e., it is assumed $\Phi=1$. As a result, $r_i^{max}$ is set equal to the highest rate available for a channel condition $C_i$.

The values $r_i^{max}$ are entered into the table of FIG. 5 along row 82. It should be noted that the rates $r_i^{max}$ may change over time as channel conditions $C_i$ vary. Row 84 indicates the amount of data currently in a queue associated with a particular mobile station, and row 86 indicates the arrival time $A_i$ of the oldest data in the queue associated with a particular mobile station. Row 88 indicates a deadline that is calculated for each mobile station. Deadline $D_i$ is calculated in accordance with Equation 2 where most of the variables are taken from the table of FIG. 5.

$$D_i = S\left(\frac{SIZE_i}{r_i^{max}}\right) + A_i \qquad \text{Equation 2}$$

The value S, or stretch variable, indicated in Equation 2 is initially set equal to 1. It should be noted that the deadline $D_i$ for each mobile station may be recalculated for each transmission period so that the deadline changes from transmission period to transmission period.

It should also be noted that the channel conditions $C_i$ and data rates $r_i^{max}$ associated with each mobile station may be recalculated periodically, for example they may be recalculated for each transmission period. It is also possible to keep the initial $C_i$ and $r_i^{max}$ that were calculated when the mobile station was first entered into the table of FIG. 5.

Once a deadline $D_i$ is established for each mobile station, a scheduling priority may be established for transmitting data to the mobile station. In some systems, data may be transmitted to one mobile station at a time, therefore providing that mobile station with the entire transmit power that is available. In other systems, data may be transmitted to several mobiles at a time, therefore requiring the sharing of the total transmit power.

In the case where data is transmitted to only one mobile at a time, the mobile station with the earliest deadline is given the highest scheduling priority and is selected to receive data that is transmitted at the rate $r_i^{max}$ associated with that mobile station. At the end of that transmission period, the values $D_i$ may be recalculated and a mobile station is selected to receive data. It is also possible to keep the values $D_i$ until the mobile station currently selected to receive data no longer has data in the queue. Once a particular mobile station's queue is emptied, the value S is recalculated for use in further deadline calculations. The value S is recalculated in accordance with Equation 3.

$$S = \frac{F_i - A_i}{SIZE_i / r_i^{max}} \qquad \text{Equation 3}$$

The variable $F_i$ corresponds to the completion time or the time at which the particular mobile station's queue was emptied and the value $r_i^{max}$ may be taken from the table of FIG. 5. It should be noted that the value $r_i^{max}$ may be the initial value that was calculated when the mobile station was first entered into the table, or the current value of $r_i^{max}$ which may be the latest of many recalculated values. If $r_i^{max}$ was recalculated, the history of the values of $r_i^{max}$ may be used to determine the value of $r_i^{max}$ in Equation 3. It is possible to determine the value $r_i^{max}$ of Equation 3 by selecting the maximum or minimum $r_i^{max}$ value from the history, or the value used in Equation 3 may be based on an average or any function of the history of $r_i^{max}$ values.

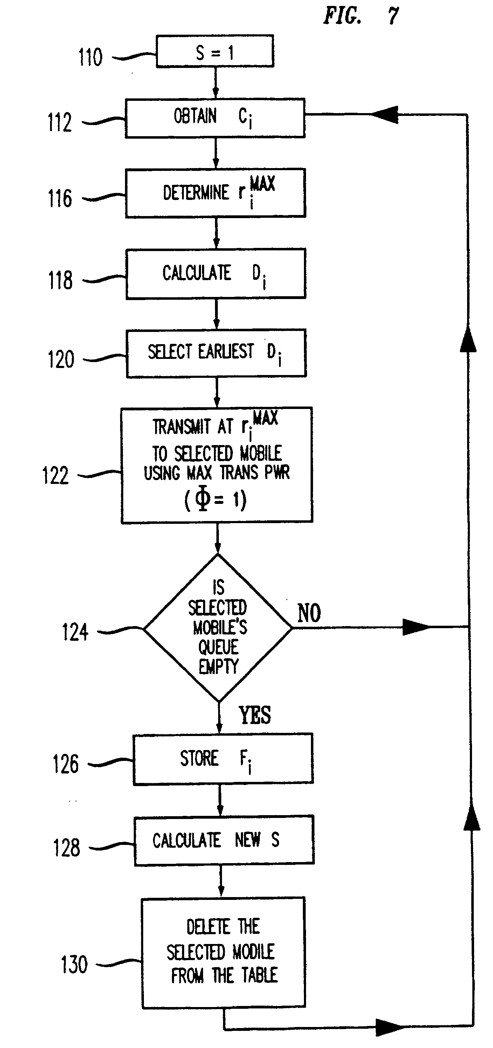

FIG. 7 is a flowchart for establishing transmission scheduling priorities to mobile stations in a system where data is transmitted to only one mobile station at a time. The flowchart of FIG. 7 is executed for each transmission period. In step 110, S is initially set equal to 1. In step 112, the channel condition variable $C_i$ is obtained or determined for each mobile station. In step 116, the largest standard rate $r_i^{max}$ is determined using $C_i$ and the calibration data tables. In step 118, the deadlines are calculated for each mobile station in accordance with Equation 2. The earliest deadline is selected in step 120, and in step 122 data is transmitted to the selected mobile station at the maximum standard rate associated with that mobile station using the entire power budget for the cell or sector in which the mobile station is located (power fraction $\Phi=1$). In step 124, it is determined whether the mobile station's queue has been emptied. If it is determined that the mobile station's queue is not empty, steps 112 and 116 are executed where $C_i$ and $r_i^{max}$ may be redetermined for all mobile stations including new mobile stations that have data in the queue. It is also possible to redetermine $C_i$ and $r_i^{max}$ for only the new mobile stations while maintaining the older values for mobile stations that previously had data in the queue. If in step 124 it is determined that the mobile station's queue has emptied, the finish time $F_i$ as-

sociated with that mobile is stored in the table of FIG. 5 and a new value of S is calculated in accordance with Equation 3. It should be recalled that this new value of S can be calculated using a history of values for $r_i^{max}$. The history of $r_i^{max}$ values is available when the value $r_i^{max}$ is redetermined each time steps 112 through 116 are executed. When a history is available, the maximum of the history of $r_i^{max}$ values may be selected, or the average of the values may be selected. If the new $r_i^{max}$ is not redetermined for each mobile station, and the initial $r_i^{max}$ value is kept, then the initial value of $r_i^{max}$ may be used in Equation 3 when recalculating S. In step 130, the mobile station associated with the emptied queue is removed from the table of FIG. 5, and then step 112 is once again executed. As discussed earlier, the variables for each mobile station may be redetermined each time the flowchart of FIG. 7 is executed, or they may be determined once and then stored when a mobile station's data initially enters the queue.

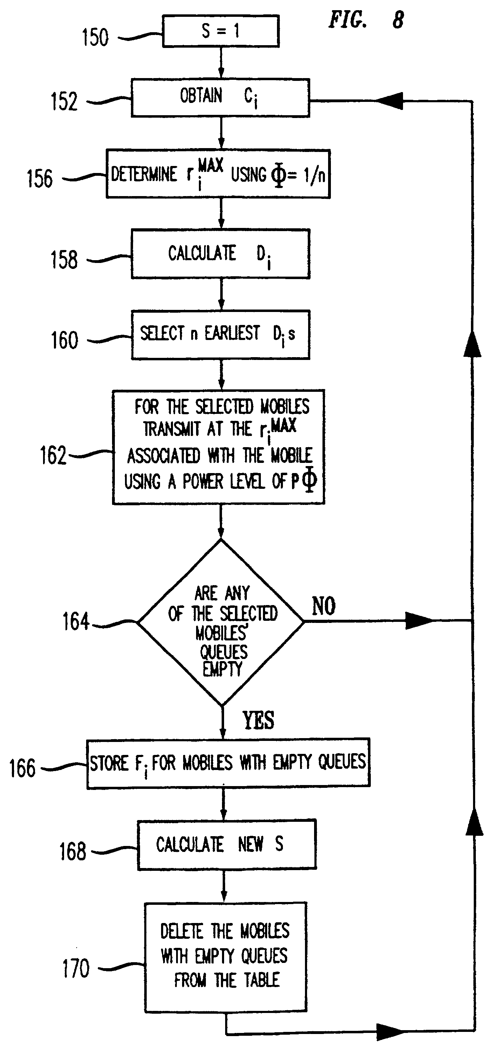

FIG. 8 illustrates a scheduling scheme that is similar to that of FIG. 7 except that data is transmitted to n mobile stations at one time. As with FIG. 7, this flowchart is executed for each transmission period. In step 150, the stretch variable S is initially set equal to 1 and then in step 152, the value $C_i$ is obtained for each mobile station. The standard maximum rate $r_j^{max}$ is determined for each mobile station in step 156 using $C_i$ and the calibration data tables; but in this case, Equation 4 is used to calculate the value of power fraction $\Phi$.

$$\Phi = \frac{1}{n} \qquad \text{Equation 4}$$

This is necessary because the total transmission power P for the cell or sector is now shared across n mobile stations equally. In step 158, the deadlines $D_i$ are calculated for each mobile station in accordance with Equation 2 and in step 160; the n mobile stations having the earliest deadlines and therefore the highest scheduling priorities are selected. In step 162, data is transmitted to the n mobile stations where each mobile station receives data at the maximum standard rate $r_i^{max}$ associated with that mobile station using a power level of $P\,\Phi$. In a fashion similar to FIG. 7, in step 164 it is determined whether any of the n mobile stations have emptied their queue. If none of the queues are empty, step 152 is executed. As mentioned earlier, the values $C_i$ and $r_i^{max}$ may be redetermined for all mobile stations or they may be redetermined for just the new mobile stations that have data in the queue. If in step 164 it is determined that one or more of the n mobile stations have emptied their queues, the completion times $F_i$ are stored in the table of FIG. 5 during step 166. In step 168, a new value of S is calculated in accordance with Equation 3 using the rate $r_i^{max}$ from the table in FIG. 5, or using one of the rates or average of the rates in the rate history associated with the mobile station. If more than one mobile station's queue is emptied at this time, the value of S may be recalculated based on any one of the mobile stations. The new value of S may also be determined by calculating a value of S based on each of the mobile stations with an empty queue and then selecting the largest value of S as the new S value for use in Equation 2. After the recalculation of S, step 170 is executed where the mobile stations associated with emptied queues are removed from the table of FIG. 5. After step 170, step 152 is executed as discussed above.

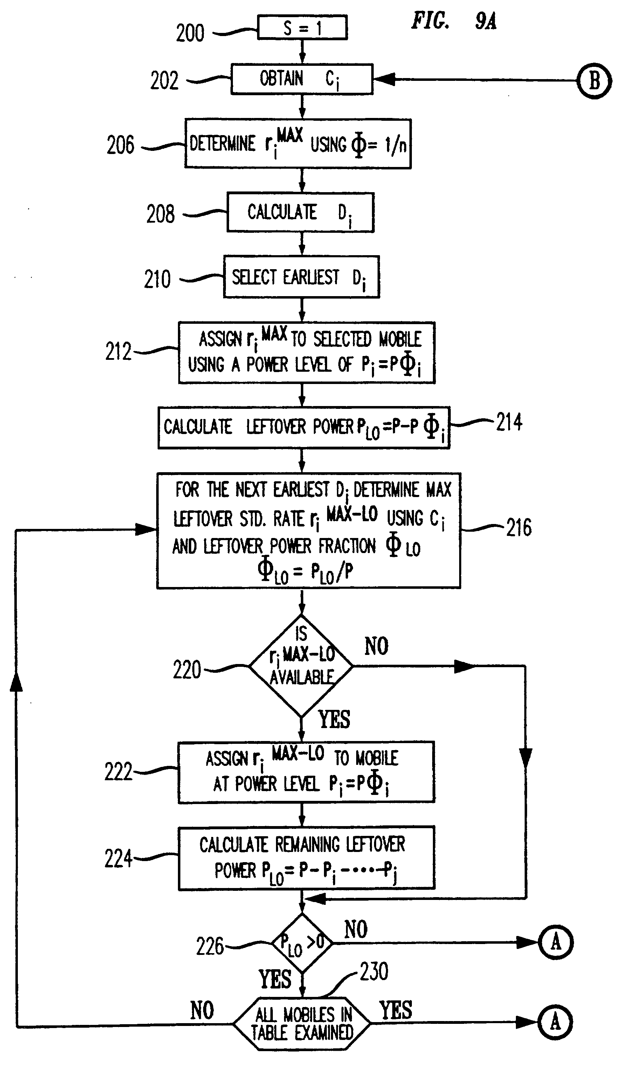

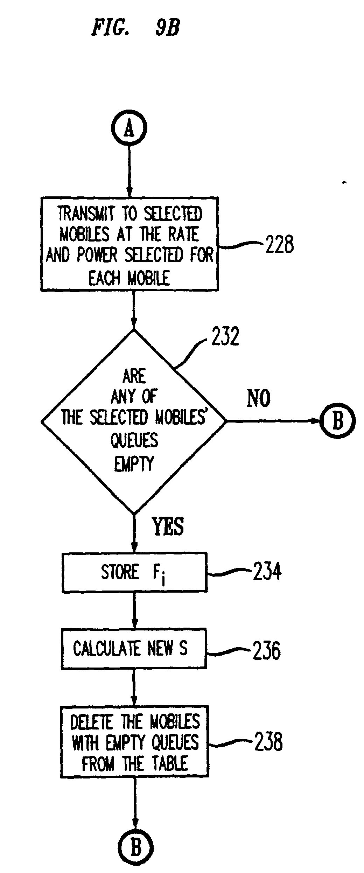

FIG. 9 illustrates a system where data is transmitted to more than one mobile station simultaneously; however, each mobile station does not receive the same amount of transmission power. As with the other flowcharts, it should be noted that the flowchart of FIG. 9 is executed for each transmission period. In step 200, S is initially set equal to 1 and in step 202, the value $C_i$ is obtained for each mobile station. In step 206, using $C_i$ and the calibration data tables, the maximum standard rate $r_i^{max}$ is determined for each mobile station assuming that each mobile station gets the total transmit power budget for a particular cell or sector, i.e., $\Phi=1$. In step 208, the deadline $D_i$ is calculated for each mobile station in accordance with Equation 2. In step 210, the mobile station with the earliest deadline and therefore highest scheduling priority is selected. In step 212 and in accordance with Equation 5, the first selected mobile station is assigned the maximum standard rate $r_i^{max}$ associated with that mobile station from the table of FIG. 5 using a transmit power level $P_i$. The transmit power $P_i$ is calculated using the value $\Phi_i$ associated with that mobile station, where P is the total transmission power for the cell or sector. The value $\Phi_i$ is obtained from the calibration data tables using the values of $C_i$ and $r_i^{max}$ associated with the mobile station.

$$P_i = P\Phi_i \qquad \text{Equation 5}$$

In step 214 and in accordance with Equation 6, the leftover power $P_{LO}$ is determined.

$$P_{LO} = P - P\Phi_i \qquad \text{Equation 6}$$

The leftover power is determined by subtracting the power associated with the transmissions for the first mobile station from the total power available for the cell or sector. In step 216, the mobile station with the next earliest deadline $D_i$ and therefore next highest scheduling priority is selected. The leftover standard rate $R_i^{maxLO}$ for the selected mobile is determined based on the value of $C_i$ associated with the selected mobile and the leftover power fraction $\Phi_{LO}$ using the calibration data tables. The value of $\Phi_{LO}$ is determined using Equation 7.

$$\Phi_{LO} = \frac{P_{LO}}{P} \qquad \text{Equation 7}$$

When using the calibration data table to determine $r_i^{maxLO}$, the rate associated with the largest $\Phi$ that does not exceed $\Phi_{LO}$ is used. In step 220, it is determined whether a maximum standard leftover rate $r_i^{maxLO}$ is available from step 216. It should be noted that an $r_i^{maxLO}$ may not be available because for some values of C, $\Phi_{LO}$ may be less than the $\Phi$ associated with the lowest standard rate in the calibration data table. If $r_i^{maxLO}$ is unavailable, step 226 is executed. If $r_i^{maxLO}$ is available, step 222 is executed where the maximum standard leftover rate is assigned to the second selected mobile station using a power level $P_i$ that is equal to the value calculated in accordance with Equation 8, where the value $C_i$ and $r_i^{maxLO}$ are used to obtain the value $\Phi_i$ from the calibration data table.

$$P_i = P\Phi_i \qquad \text{Equation 8}$$

In step 224, it is determined what additional power is leftover by subtracting the power associated with the transmissions that will be made to the first and/ or other mobile stations that are scheduled to receive data from the total transmission power available to the cell or sector.

$$P_{LO} = P - P_i - ... - P_j \qquad \text{Equation 9}$$

In step 226, it is determined whether the remaining leftover power is greater than zero. If the power is not greater than zero, step 228 is executed to begin transmission. If the power is greater than zero, step 230 is executed where it is determined whether all of the mobile stations having data in the queue have been examined to determine whether it is possible to transmit data to those mobile stations using some leftover power. If it is determined that all the mobile stations have not been examined, step 216 is executed. In step 216, the mobile station with the next earliest deadline $D_i$ and therefore next highest scheduling priority is selected for examination to determine whether there is sufficient leftover power to transmit to the selected mobile station using at least the lowest standard data rate. If it is determined that all the mobile stations having data in the queue have been examined, step 228 is executed where transmissions are made to each of the j mobile stations that were assigned a transmission rate and power level. Data is transmitted to each of the j mobile stations at the data rate and power level calculated for that mobile station. In step 232, it is determined whether any of the j mobile stations are now associated with an empty queue. If no queues have been emptied, step 202 is executed. It should be noted that, as discussed earlier, the values $C_i$ and $r_i^{max}$ may be redetermined for each transmission period for all the mobile stations in the table of FIG. 5, or the originally calculated values may be kept for each mobile station while new values are calculated for the new mobile stations. If in step 232, it is determined that any of the j mobile stations have emptied a queue, step 234 is executed where the finish time $F_i$ is entered into the table of FIG. 5. In step 236, a new S is calculated using Equation 3 where, as discussed earlier, the $r_i^{max}$ value used in Equation 3 may be the originally calculated value or it may be obtained using the history of $r_i^{max}$ values. If more than one mobile station's queue has been emptied, it is possible to simply recalculated S using any one of the mobile stations that have an empty queue. The new value of S may also be determined by calculating a value of S based on each of the mobile stations with an empty queue, and then selecting the largest resulting value as the new S value for use in Equation 2. After S has been recalculated, step 238 is executed where the mobile stations associated with empty queues are deleted from the table of FIG. 5. At this point, step 202 is executed where, as discussed above, all the values in the table of FIG. 5 may be redetermined for all of the mobile stations or where the values for just the new mobile stations are determined.

**Claims**

1. A method for scheduling communications, **characterized by** the steps of:

   associating a channel condition value with each of a plurality of mobile stations (18, 20, 22) to create a plurality of associated channel condition values, where each associated channel condition value indicates a quality of a communication channel to a mobile station (18, 20, 22) and where at least two of the plurality of associated channel condition values are unequal; and
   determining a mobile station scheduling priority for each of the plurality of mobile stations (18, 20, 22) using the associated channel condition values.

2. The method of claim 1, **characterized in that** the associated channel condition values are updated at least once per transmission period.

3. A method for scheduling communications, **characterized by** the steps of:

   assigning a transmission rate to each of a plurality of mobile stations (18, 20, 22) to create a plurality of assigned transmission rates, where at least two of the plurality of assigned transmission rates are unequal; and
determining a mobile station scheduling priority for each of the plurality of mobile stations (18, 20, 22) using the assigned transmission rates.

4. The method of claim 3, **characterized in that** the assigned transmission rates are updated at least once per transmission period.

5. The method of claim 1 or 3, **characterized in that** the step of determining the mobile station scheduling priority comprises using a measure of an amount of data in a queue associated with each of the plurality of mobile stations (18, 20, 22).

6. The method of claim 1,2,3,4 or 5, **characterized in that** the step of determining a mobile station scheduling priority is performed at least once per transmission period.

7. The method of claim 5, further **characterized in that** the step of transmitting data from the queue to at least a highest priority mobile station (18, 20, 22) having a highest mobile station scheduling priority.

8. The method of claim 5, further **characterized in that** the step of transmitting data from the queue to only a highest priority mobile station (18, 20, 22) having a highest mobile station scheduling priority.

9. The method of claim 5, further **characterized in that** the step of transmitting data from the queue to each of a selected plurality of mobile stations (18, 20, 22), the selected plurality of mobile stations (18, 20, 22) belonging to the plurality of mobile stations (18, 20, 22) and having a higher mobile station scheduling priority than an unselected plurality of mobile stations (18, 20, 22) belonging to the plurality of mobile stations (18, 20, 22).

10. The method of claim 9, **characterized in that** transmissions to each of the selected plurality of mobile stations (18, 20, 22) are made using substantially equal transmit power.

11. The method of claim 9, **characterized in that** transmissions to each of the selected plurality of mobile stations (18, 20, 22) are made using unequal transmit power.

**Patentansprüche**

1. Verfahren zum Planen von Kommunikationen, **gekennzeichnet durch** folgende Schritte:

   Zuordnen eines Kanalzustandswertes zu jeder einer Mehrzahl von Mobilstationen (18, 20, 22) zur Erzeugung einer Mehrzahl von zugehörigen Kanalzustandswerten, wobei jeder zugehörige Kanalzustandswert eine Güte eines Kommunikationskanals zu einer Mobilstation (18, 20, 22) anzeigt und wobei mindestens zwei aus der Mehrzahl von zugehörigen Kanalzustandswerten ungleich sind; und
Bestimmen einer Mobilstations-Planüngspriorität für jede der Mehrzahl von Mobilstationen (18, 20, 22), die die zugehörigen Kanalzustandswerte benutzen.

2. Verfahren nach Anspruch 1, **dadurch gekennzeichnet, daß** die zugehörigen Kanalzustandswerte mindestens einmal pro Übertragungsperiode aktualisiert werden.

3. Verfahren zum Planen von Kommunikationen, **gekennzeichnet durch** folgende Schritte:

Zuordnen einer Übertragungsrate zu jeder einer Mehrzahl von Mobilstationen (18, 20, 22) zum Erzeugen einer Mehrzahl zugeordneter Übertragungsraten, wobei mindestens zwei aus der Mehrzahl von zugeordneten Übertragungsraten ungleich sind; und
Bestimmen einer Mobilstations-Planungspriorität für jede der Mehrzahl von Mobilstationen (18, 20, 22), die die zugeordneten Übertragungsraten benutzen.

4. Verfahren nach Anspruch 3, **dadurch gekennzeichnet, daß** die zugeordneten Übertragungsraten mindestens einmal pro Übertragungsperiode aktualisiert werden.

5. Verfahren nach Anspruch 1 oder 3, **dadurch gekennzeichnet, daß** der Schritt des Bestimmens der Mobilstations-Planungspriorität das Benutzen eines Maßes eines Betrags an Daten in einer Warteschlange umfaßt, die jeder der Mehrzahl von Mobilstationen (18, 20, 22) zugeordnet ist.

6. Verfahren nach Anspruch 1, 2, 3, 4 oder 5, **dadurch gekennzeichnet, daß** der Schritt des Bestimmens Mobilstations-Planungspriorität mindestens einmal pro Übertragensperiode durchgeführt wird.

7. Verfahren nach Anspruch 5, weiterhin **dadurch gekennzeichnet, daß** der Schritt des Übertragens von Daten aus der Warteschlange zu mindestens einer Mobilstation mit höchster Priorität (18, 20, 22) mit einer höchsten Mobilstations-Planungspriorität stattfindet.

8. Verfahren nach Anspruch 5, weiterhin **dadurch gekennzeichnet, daß** der Schritt des Übertragens von Daten aus der Warteschlange zu nur einer Mobilstation mit höchster Priorität (18, 20, 22) mit einer höchsten Mobilstations-Planungspriorität stattfindet.

9. Verfahren nach Anspruch 5, weiterhin **dadurch gekennzeichnet, daß** der Schritt des Übertragens von Daten aus der Warteschlange zu jeder einer ausgewählten Mehrzahl von Mobilstationen (18, 20, 22) stattfindet, wobei die ausgewählte Mehrzahl von Mobilstationen (18, 20, 22) zu der Mehrzahl von Mobilstationen (18, 20, 22) gehört und eine höhere Mobilstations-Planungspriorität aufweist, als eine nicht ausgewählte Mehrzahl von Mobilstationen (18, 20, 22), die zu der Mehrzahl von Mobilstationen (18, 20, 22) gehören.

10. Verfahren nach Anspruch 9, **dadurch gekennzeichnet, daß** Übertragungen zu jeder der ausgewählten Mehrzahl von Mobilstationen (18, 20, 22) unter Verwendung von im wesentlichen gleicher Sendeleistung durchgeführt werden.

11. Verfahren nach Anspruch 9, **dadurch gekennzeichnet, daß** Übertragungen zu jeder der ausgewählten Mehrzahl von Mobilstationen (18, 20, 22) unter Verwendung von ungleicher Sendeleistung durchgeführt werden.

## Revendications

1. Procédé de planification de communications, **caractérisé par** les étapes :

d'association d'une valeur de condition de canal à chacun d'une pluralité de postes mobiles (18, 20, 22) afin de créer une pluralité de valeurs de condition de canal associées, où chaque valeur de condition de canal associée indique une qualité d'un canal de communication jusqu'à un poste mobile (18, 20, 22) et où au moins deux de la pluralité de valeurs de condition de canal associées sont inégales ; et
de détermination d'une priorité de planification de poste mobile pour chacun de la pluralité de postes mobiles (18, 20, 22) en utilisant les valeurs de condition de canal associées.

2. Procédé selon la revendication 1, **caractérisé en ce que** les valeurs de condition de canal associées sont mises à jour au moins une fois par période de transmission.

3. Procédé de planification de communications, **caractérisé par** les étapes :

d'attribution d'un débit de transmission à chacun d'une pluralité de postes mobiles (18, 20, 22) afin de créer une pluralité de débits de transmission attribués, où au moins deux de la pluralité de débits de transmission attribués sont inégaux ; et

de détermination d'une priorité de planification de poste mobile pour chacun de la pluralité de postes mobiles (18, 20, 22) en utilisant les débits de transmission attribués.

4. Procédé selon la revendication 3, **caractérisé en ce que** les débits de transmission attribués sont mis à jour au moins une fois par période de transmission.

5. Procédé selon la revendication 1 ou 3, **caractérisé en ce que** l'étape de détermination de la priorité de planification de poste mobile comprend l'utilisation d'une mesure d'une quantité de données dans une file d'attente associée à chacun de la pluralité de postes mobiles (18, 20, 22).

6. Procédé selon la revendication 1, 2, 3, 4 ou 5, **caractérisé en ce que** l'étape de détermination d'une priorité de planification de poste mobile est exécutée au moins une fois par période de transmission.

7. Procédé selon la revendication 5, **caractérisé en outre par** l'étape de transmission de données depuis la file d'attente jusqu'à au moins un poste mobile de la plus haute priorité (18, 20, 22) ayant la plus haute priorité de planification de poste mobile.

8. Procédé selon la revendication 5, **caractérisé en outre par** l'étape de transmission de données depuis la file d'attente jusqu'à seulement un poste mobile de la plus haute priorité (18, 20, 22) ayant la plus haute priorité de planification de poste mobile.

9. Procédé selon la revendication 5, **caractérisé en outre par** l'étape de transmission de données depuis la file d'attente jusqu'à chacun d'une pluralité de postes mobiles (18, 20, 22), la pluralité sélectionnée de postes mobiles (18, 20, 22) appartenant à la pluralité de postes mobiles (18, 20, 22) et ayant une priorité de planification de poste mobile supérieure à celle d'une pluralité non sélectionnée de postes mobiles (18, 20, 22) appartenant à la pluralité de postes mobiles (18, 20, 22).

10. Procédé selon la revendication 9, **caractérisé en ce que** les transmissions jusqu'à chacun de la pluralité sélectionnée de postes mobiles (18, 20, 22) sont effectuées en utilisant des puissances d'émission substantiellement égales.

11. Procédé selon la revendication 9, **caractérisé en ce que** les transmissions jusqu'à chacun de la pluralité sélectionnée de postes mobiles (18, 20, 22) sont effectuées en utilisant des puissances d'émission inégales.

## FIG 1

18

22

20

14

M
M
M
BS
M
M

10

12

MSC

NETWORK

M
M
BS
M
M

EP 1 154 665 B1

## FIG 2

| MOBILE 1 | MOBILE 2 | MOBILE 3 | MOBILE 4 |
|---|---|---|---|

FIG 4

MOBILE 1  MOBILE 2  MOBILE 3  MOBILE 4

100%
90%
80%
70%
60%
50%
40%
30%
20%
10%

FIG 3

32        34        36

SEQ 1    MOBILE 2  MOBILE 1  MOBILE 3  MOBILE 1
30

SEQ N    MOBILE 4  MOBILE 2  MOBILE 1  MOBILE 3
40

42        44        46

*FIG 5*

| | MOBILE 1 | MOBILE 2 | MOBILE 3 | • • • • | MOBILE n |
|---|---|---|---|---|---|
| 82 — Rate | $r_1^{MAX}$ | $r_2^{MAX}$ | $r_3^{MAX}$ | • • • • | $r_n^{MAX}$ |
| 80 — Chan Cond | $C_1$ | $C_2$ | $C_3$ | • • • • | $C_n$ |
| 84 — Queue | $Size_1$ | $Size_2$ | $Size_3$ | • • • • | $Size_n$ |
| 86 — Arrival Time | $A_1$ | $A_2$ | $A_3$ | • • • • | $A_n$ |
| 88 — Deadline | $D_1$ | $D_2$ | $D_3$ | • • • • | $D_n$ |
| Completion Time | $F_1$ | | $F_3$ | | |

*FIG 6A*

FER = 0.01%

| | $r^1$ | $r^2$ | $r^3$ | | $r^N$ |
|---|---|---|---|---|---|
| $C^M$ | $\phi_{M1}$ | $\phi_{M2}$ | $\phi_{M3}$ | | $\phi_{MN}$ |
| $C^5$ | $\phi_{51}$ | $\phi_{52}$ | $\phi_{53}$ | | $\phi_{5N}$ |
| $C^4$ | $\phi_{41}$ | $\phi_{42}$ | $\phi_{43}$ | | $\phi_{4N}$ |
| $C^3$ | $\phi_{31}$ | $\phi_{32}$ | $\phi_{33}$ | | $\phi_{3N}$ |
| $C^2$ | $\phi_{21}$ | $\phi_{22}$ | $\phi_{23}$ | | $\phi_{2N}$ |
| $C^1$ | $\phi_{11}$ | $\phi_{12}$ | $\phi_{13}$ | | $\phi_{1N}$ |

*FIG 6B*

FER = 0.001%

| | $r^1$ | $r^2$ | $r^3$ | $r^N$ |
|---|---|---|---|---|
| $C^M$ | $\Phi_{M1}$ | $\Phi_{M2}$ | $\Phi_{M3}$ | $\Phi_{MN}$ |
| $C^5$ | $\Phi_{51}$ | $\Phi_{52}$ | $\Phi_{53}$ | $\Phi_{5N}$ |
| $C^4$ | $\Phi_{41}$ | $\Phi_{42}$ | $\Phi_{43}$ | $\Phi_{4N}$ |
| $C^3$ | $\Phi_{31}$ | $\Phi_{32}$ | $\Phi_{33}$ | $\Phi_{3N}$ |
| $C^2$ | $\Phi_{21}$ | $\Phi_{22}$ | $\Phi_{23}$ | X |
| $C^1$ | $\Phi_{11}$ | $\Phi_{12}$ | X | X |

*FIG 6C*

FER = 0.0001%

| | $r^1$ | $r^2$ | $r^3$ | $r^N$ |
|---|---|---|---|---|
| $C^M$ | $\Phi_{M1}$ | $\Phi_{M2}$ | $\Phi_{M3}$ | $\Phi_{MN}$ |
| $C^5$ | $\Phi_{51}$ | $\Phi_{52}$ | $\Phi_{53}$ | $\Phi_{5N}$ |
| $C^4$ | $\Phi_{41}$ | $\Phi_{42}$ | $\Phi_{43}$ | X |
| $C^3$ | $\Phi_{31}$ | $\Phi_{32}$ | X | X |
| $C^2$ | $\Phi_{21}$ | X | X | X |
| $C^1$ | X | X | X | X |

*FIG. 7*

110 — $S = 1$

112 — OBTAIN $C_i$

116 — DETERMINE $r_i^{MAX}$

118 — CALCULATE $D_i$

120 — SELECT EARLIEST $D_i$

122 — TRANSMIT AT $r_i^{MAX}$ TO SELECTED MOBILE USING MAX TRANS PWR ($\Phi = 1$)

124 — IS SELECTED MOBILE'S QUEUE EMPTY

NO

YES

126 — STORE $F_i$

128 — CALCULATE NEW S

130 — DELETE THE SELECTED MOBILE FROM THE TABLE

*FIG. 8*

150 — | S = 1 |

152 — | OBTAIN $C_i$ |

156 — | DETERMINE $r_i^{MAX}$ USING $\Phi = 1/n$ |

158 — | CALCULATE $D_i$ |

160 — | SELECT n EARLIEST $D_i$s |

162 — | FOR THE SELECTED MOBILES TRANSMIT AT THE $r_i^{MAX}$ ASSOCIATED WITH THE MOBILE USING A POWER LEVEL OF $P\Phi$ |

164 — ARE ANY OF THE SELECTED MOBILES' QUEUES EMPTY — **NO**

**YES**

166 — | STORE $F_i$ FOR MOBILES WITH EMPTY QUEUES |

168 — | CALCULATE NEW S |

170 — | DELETE THE MOBILES WITH EMPTY QUEUES FROM THE TABLE |

*FIG. 9A*

200 — S = 1

202 — OBTAIN $C_i$ ← (B)

206 — DETERMINE $r_i^{MAX}$ USING $\Phi = 1/n$

208 — CALCULATE $D_i$

210 — SELECT EARLIEST $D_i$

212 — ASSIGN $r_i^{MAX}$ TO SELECTED MOBILE USING A POWER LEVEL OF $P_i = P\Phi_i$

CALCULATE LEFTOVER POWER $P_{LO} = P - P\Phi_i$ — 214

FOR THE NEXT EARLIEST $D_i$ DETERMINE MAX LEFTOVER STD. RATE $r_i^{MAX-LO}$ USING $C_i$ AND LEFTOVER POWER FRACTION $\Phi_{LO}$
$\Phi_{LO} = P_{LO}/P$ — 216

220 — IS $r_i^{MAX-LO}$ AVAILABLE — NO

YES

222 — ASSIGN $r_i^{MAX-LO}$ TO MOBILE AT POWER LEVEL $P_i = P\Phi_i$

224 — CALCULATE REMAINING LEFTOVER POWER $P_{LO} = P - P_i - \cdots - P_j$

226 — $P_{LO} > 0$ — NO → (A)

YES

230 — NO — ALL MOBILES IN TABLE EXAMINED — YES → (A)

**FIG. 9B**

Ⓐ

TRANSMIT TO SELECTED
MOBILES AT THE RATE
AND POWER SELECTED FOR
EACH MOBILE — 228

ARE
ANY OF
THE SELECTED MOBILES'
QUEUES
EMPTY — 232

NO → Ⓑ

YES

STORE $F_i$ — 234

CALCULATE NEW S — 236

DELETE THE MOBILES
WITH EMPTY QUEUES
FROM THE TABLE — 238

Ⓑ

17